# EUROPÄISCHE PATENTANMELDUNG

(11) **EP 1 046 870 A2**
(43) Veröffentlichungstag der Anmeldung: **25.10.2000**
(21) Anmeldenummer: 00108200.7
(22) Anmeldetag: 14.04.2000
(51) Int. Cl.: F25B 35/04

(54) **Verfahren zum Aufheizen und Abkühlen einer Sorberanordnung**

(30) Priorität: 20.04.1999 DE 19917740
(71) Anmelder: ZEO-TECH Zeolith Technologie GmbH, D-85716 Unterschleissheim (DE)
(72) Erfinder: Maier-Laxhuber, Peter, Dr., 85386 Dietersheim (DE)

(57) **Zusammenfassung**

Verfahren zum Aufheizen und Abkühlen einer Sorberanordnung mit einer Sorptionsmittelfüllung (2), die über einen Sorber-Wärmetauscher erwärmt und anschließend wieder gekühlt wird, wobei zum Aufheizen und zum Abkühlen eine erzwungene Gas-Strömung (ABCDEFG) über den Sorber-Wärmetauscher geführt wird und die Gas-Strömung (ABCDEFG) beim Aufheizprozeß durch die direkte Zumischung heißer Gase (D) erwärmt wird.

## Beschreibung

Die Erfindung betrifft ein Verfahren zum Aufheizen und Abkühlen einer Sorberanordnung mit einer Sorptionsmittelfüllung, die über einen Sorber-Wärmetauscher erwärmt und anschließend wieder gekühlt wird.

Sorptionsvorrichtungen zum Kühlen und/oder Heizen mit festen Sorptionsmitteln sind aus der EP 0 203 558 B1 bekannt. Sorptionsbehälter, gefüllt mit Sorptionsmitteln saugen dabei Arbeitsmitteldampf, welcher in einem Verdampfer entsteht, ab und sorbieren ihn in der Sorptionsmittelfüllung unter Wärmefreisetzung. Diese Sorptionswärme muß aus der Sorptionsmittelfühlung abgeführt werden. Nachdem das Sorptionsmittel gesättigt ist, kann es durch Wärmezufuhr wieder desorbiert werden (Arbeitsmittel dampft aus dem Sorptionsmittel aus).

Für feste Sorptionsmittel, wie beispielsweise Zeolith, sind zur Desorption Temperaturen von vorzugsweise über 200 °C notwendig. Hierfür geeignete Wärmemengen stammen beispielsweise aus Verbrennungsprozessen (z.B. Verbrennungsmotoren oder Gasbrenner) mit hohen Abgastemperaturen.

Die aus einem Sorptionsapparat abzuführenden Wärmemengen stehen hingegen auf einem viel tieferen Temperaturniveau zur Verfügung.

Bei den o.g. Sorptionsanordnungen wird die Desorptionswärme von einem gasförmigen Wärmeträger aufgenommen und die abzuführende Wärmemenge an einen flüssigen Wärmeträger (z.B. Wasser) abgegeben.

Für Zeolithe sind Temperaturen von über 600°C schädlich. Eine direkte Befeuerung einer Zeolith-Füllung ist deshalb nicht möglich.

Zudem führt eine direkte Kühlung über einen Wasserkreislauf zu Beginn der Abkühlphase, wo die Temperaturen der Füllung weit über 100°C liegen, zwangsläufig zu Dampfschlägen.

Das Sorptionsmittel muß bei derartigen Sorptionsapparaten mit zwei Wärmetauschern (einem Wärmetauscher für Gas und einem Wärmetauscher für Wasser) in gutem thermischem Kontakt stehen und zugleich für den Stofftransport ausreichende Querschnitte aufweisen. Die Herstellung derartiger Sorberanordnungen ist nicht nur wegen der doppelt auszuführenden Wärmetauscher sehr aufwendig und teuer.

Aufgabe der vorliegenden Erfindung ist ein Verfahren zum Aufheizen und Abkühlen einer Sorberanordnung, welches eine effiziente und wirtschaftliche Betriebsweise bei niedrigen Investitionskosten erlaubt.

Gelöst wird diese Aufgabe durch die kennzeichnenden Merkmale des Anspruch 1. Die abhängigen Ansprüche zeigen weitere erfinderische Verfahrensschritte.

Über den das Sorptionsmittel enthaltenden Sorber-Wärmetauscher wird zum Aufheizen und zum Abkühlen eine erzwungene Gas-Strömung geführt. Beim Aufheizprozeß wird die Gas-Strömung durch die direkte Zumischung heißer Gase erwärmt.

Die Sorberanordnung benötigt dadurch nur einen einzigen Wärmetauscher, der die Wärme in die Sorptionsmittelfühlung hinein und anschließend wieder ableitet. Die Wärmeleitungswege innerhalb der Sorptionsmittelfühlung sind dadurch beim Aufheizen und beim Abkühlvorgang identisch. Die Temperaturverteilung innerhalb der Sorptionsmittelfüllung wird damit homogener und die Sorptionscharakteristik verbessert.

In Anwendungsfällen bei denen die Antriebsenergie beispielsweise aus den heißen Abgasen eines Verbrennungsmotors stammt und die abzuführende Wärmemengen an die Umgebungsluft übertragen wird, ist bei der erfindungsgemäßen Sorberanordnung nur ein einziger Sorber-Wärmetauscher notwendig. Beim Stand der Technik sind hierfür bis zu vier Wärmetauscher und zwei Wärmeträgermedien notwendig.

Durch die erfindungsgemäße Zumischung heißer Gase in die erzwungene Gas-Strömung kann eine optimale Temperaturregelung der erzwungenen Gas-Strömung erreicht werden. Eine Überhitzung der Sorber-Wärmetauscher, beispielsweise durch direkte Verbrennungsgase kann ausgeschlossen werden.

Vorteilhafterweise wird die erzwungene Gas-Strömung durch ein Gebläse aufrecht erhalten. Heiße Verbrennungsgase können dann zusammen mit der erzwungenen Strömung angesaugt und im Laufrad des Gebläses ideal vermischt werden. Die aus dem Gebläse kommende, turbulente Gas-Strömung kann direkt über den Sorber-Wärmetauscher gelenkt werden, dort Wärme abgeben und im abgekühlten Zustand vom Gebläse wieder, zusammen mit heißen Verbrennungsgasen angesaugt und verwirbelt werden. Auf diese Weise entsteht eine erzwungene, zirkulierende Gas-Strömung deren Mischtemperatur optimal auf die Gegebenheiten des Sorptionsprozesses abstimmbar ist. Der durch die Zumischung erhöhte Massenstrom wird an geeigneter Stelle, vorteilhaft nach der Abkühlung im Sorber-Wärmetauscher aus dem Kreislauf ausgelenkt und gegebenenfalls in einem zusätzlichen Wärmetauscher weiter abgekühlt. Dieser zusätzliche Wärmetauscher kann erfindungsgemäß auch zur Wärmeaufhahme beim Abkühlprozeß genutzt werden.

Beim Abkühlprozeß werden normalerweise keine heißen Verbrennungsgase zugemischt. Vorteilhaft ist hier die Zumischung von Umgebungsluft um die erzwungene Gas-Strömung möglichst kühl in den Sorber-Wärmetauscher einströmen zu lassen. Je nach Anwendungsfall kann es auch von Vorteil sein, nur Umgebungsluft anzusaugen und nicht mit der austretenden Luft aus dem Sorberwärmetauscher zu vermischen. Dies empfiehlt sich beispielsweise immer dann, wenn der Sorptionsapparat als Klimagerät ohne Wärmenutzung betrieben wird. Bei der Nutzung als Wärmepumpe ist es hingegen sinnvoll, keine Umgebungsluft zuzumischen und die erzwungene Gas-Strömung über einen Wärmetauscher zu leiten, der die Wärme aus dem Sorber-Wärmetauscher an ein weiteres Wärmeträgermedium (z.B. Wasser) überträgt. Erfindungsgemäß kann es sich dabei auch um den zusätzlichen Wärmetauscher handeln, der während der Aufheizphase den abgetrennten Massenstrom weiter abkühlt.

Erfingungsgemäß können auch während der Abkühlphase zeitgleich heiße Gase zugemischt werden und die zirkulierende Gas-Strömung im zusätzlichen Wärmetauscher abgekühlt werden. Diese Betriebsweise ist dann von Vorteil, wenn der Sorptionsapparat als Wärmepumpe in Betrieb ist und die beim Abkühlprozeß abzuführenden Wärmemengen für den Heizprozeß zu gering sind. Durch die (eventuell zeitweise) Zumischung heißer Verbrennungsgase kann die Wärmeleistung des Gerätes gegenüber der Normwärmeleistung verdoppelt werden.

Für die oben beschriebenen, unterschiedlichen Betriebsmodi ist ein Klappensystem vorgesehen, das die erzwungene Gas-Strömung entweder nur im Kreislauf (zum Aufheizen und zum Abkühlen auch über den zusätzlichen Wärmetauscher), oder nur zur einmaligen Durchströmung des Sorber-Wärmetauschers lenkt. Selbstverständlich sind auch Zwischenstufen sinnvoll, in denen das Klappensystem den zusätzlichen Wärmetauscher in die erzwungene Gas-Strömung voll, teilweise oder gar nicht einbindet. Das den zusätzlichen Wärmetauscher durchströmende Medium (z.B. Wasser einer Heizungsanlage) kann auf diese Weise gezielt (z.B. auf konstantem Temperatumiveau) Wärme aufnehmen.

Als Sorptionsmittel hat sich Zeolith und als Arbeitsmittel Wasser bewährt. Für eine wirtschaftliche Betriebsweise sind obere Sorptionsmitteltemperaturen von 150 bis 300°C und tiefe von 40 bis 150°C empfehlenswert. Verwendbar sind jedoch auch andere Sorptionsmittelpaarungen, bei denen das Sorptionsmittel fest bleibt und bei der Sorption nicht flüssig wird.

Feste Sorptionsmittel haben eine geringe Wärmeleitung und einen schlechten Wärmeübergang. Da auch der Wärmeübergang von gasförmigen Medien (Luft, Abgase) auf Wärmetauscherflächen in der gleichen Größenordnung liegt, empfehlen sich prinzipiell Wärmetauscher ohne Berippung wie beispielsweise Platten, Rohre oder Wellschläuche. Einige feste Sorptionsmittel, wie beispielsweise Zeolithe sind stabil genug um auch äußere Überdrücke auf dünnwandige Wärmetauscherflächen zu kompensieren. Zusätzliche Versteifungen oder dickwandige Wärmetauscherflächen sind deshalb nicht nötig.

In der Zeichnung sind einige erfindungsgemäße Verfahrensschritte dargestellt. Es zeigen:
Fig. 1a und 1b eine Sorberanordnung während der Desorptionsphase mit brennender Gasflamme und mit erfindungsgemäßer Gasströmung und,
Fig. 2a und 2b eine mit einem zusätzlichen Wärmetauscher und einem Klappensystem erweiterte Sorberanordnung mit erfindungsgemäßer Gasströmung während der Desorptionsphase und
Fig. 3a und 3b die Anordnung nach Fig. 2a und 2b während der Abkühlphase.

In allen Figuren der Zeichnung ist jeweils derselbe Sorber-Wärmetauscher dargestellt. Er besteht aus einer Vielzahl identischer Wärmetauscherplatten 3, die eine feste Sorptionsmittelfüllung 2 enthalten. Die Wärmetauscherplatten 3 sind zu einem Paket 16 gestapelt, das zwischen den einzelnen Platten 3 Strömungskanäle 4 für die Gas-Strömung freihält. Jede einzelne Wärmetauscherplatte 3 ist über einen Anschlußstutzen 5 an eine nicht weiter dargestellte Arbeitsmitteldampfquelle bzw. -senke angeschlossen. In den meisten Sorberanordnungen handelt es sich dabei beispielsweise um Verflüssiger oder Verdampfer in die das dampfförmige Arbeitsmittel (angedeutet durch die Pfeilrichtung P) hinein oder heraus strömt.

Um den Sorber-Wärmetauscher ist ein Gehäuse 6 angeordnet, das die Gas-Strömung ABC nach außen abschirmt und im Innenraum erfindungsgemäß umlenkt. Die Gas-Strömung ABC wird durch ein Ventilatorlaufrad 7 erzwungen, das von einem außerhalb des Gehäuses 6 angeflanschten Elektromotor 8 angetrieben wird. Das Gehäuse 6 hat eine untere Öffnung 9 in die ein Brennrohr 11 eines Gasbrenners ragt und eine obere Öffnung 10 aus der ein Teilstrom E der Gas-Strömung entweichen kann. Die Gas-Strömung ABC wird im Innenraum durch ein U-förmiges Leitblech 12 so geführt, daß Gase A, die aus dem Ventilatorlaufrad 7 austreten, die äußeren Partien des Plattenpaketes durchströmen und nach einer Umleitung durch die Mittelpartie zurück zum Laufrad 7 gesaugt werden. Vor dem Eintritt in das Ventilatorlaufrad 7 kreuzt sich der Strömungsweg mit den durch die untere Öffnung einströmenden, heißen Verbrennungsgase D bzw. mit der beim Abkühlen angesaugten Umgebungsluft.

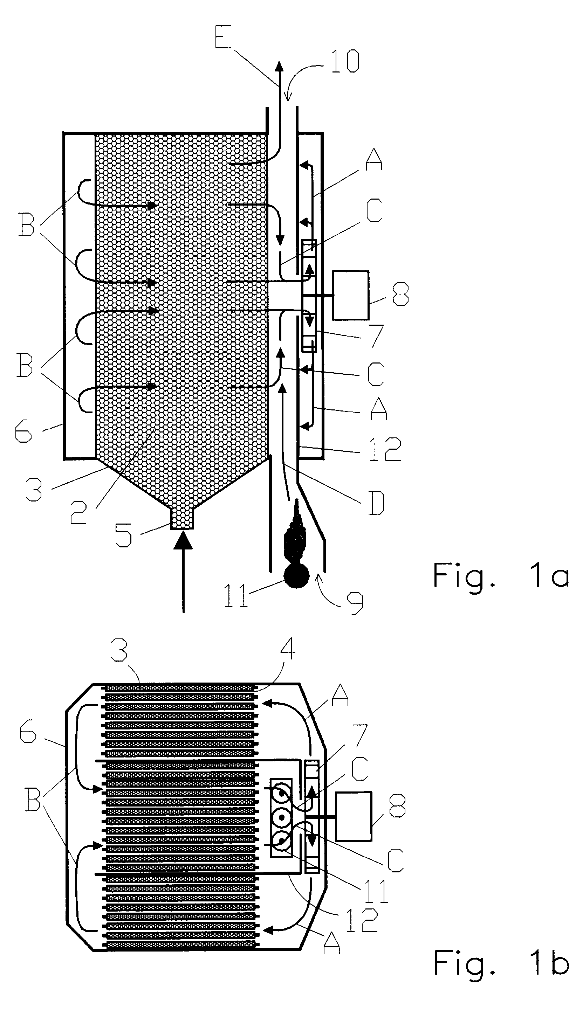

Die Figuren 1a, 2a, und 3a zeigen jeweils einen vertikalen Schnitt durch die Sorberanordnung, während die Figuren 1b, 2b, und 3b einen horizontalen Schnitt zeigen. Die Schnittebenen schneiden sich dabei in der Drehachse des Ventilatorlaufrades 7.

In den Figuren 1a und 1b sind die erfindungsgemäßen Strömungswege ABCDE während des Aufheizprozesses eingezeichnet. Heiße Flammgase D aus dem Brennrohr 11 strömen in das U-förmige Leitblech 12 und mischen sich beim Durchgang durch das Ventilatorlaufrad 7 mit der Gas-Strömung C auf eine für die Sorptionsmittelfüllung akzeptable Temperatur von vorzugsweise 350 °C. Die austretende Gas-Strömung A durchströmt die beiden äußeren Sorber-Wärmetauscherpartien und gibt Wärme an die Sorptionsmittelfüllung 2 ab. Die bereits abgekühlte Gas-Strömung B durchströmt anschließend die innere Sorber-Wärmetauscherpartie und kühlt sich weiter ab. Ein Teilstrom E verläßt durch die obere Öffnung 10 die Sorberanordnung. Dieser Teilstrom entspricht dem Massenstrom der heißen Flammgase D. Untere 9 und obere Öffnung 10 sind übereinander angeordnet, um bei einem eventuellen Ausfall des Elektromotors 8 die heißen Flammgase auf kurzem Wege aus der Sorberanordnung ausströmen zu lassen, ohne den Sorber-Wärmetauscher zu überhitzen.

Während des Abkühlprozesses wird lediglich die Gaszufuhr zum Brennrohr 11 gestoppt. Bei weiterlaufendem Ventilatorlaufrad 7 wird kalte Umgebungsluft (am Brennrohr 11 vorbei) angesaugt und über denselben Strömmungsweg ABC wie zuvor die heißen Flammgase D gelenkt. Die erhitzte Umgebungsluft E verläßt durch die obere Öffnung 10 die Sorberanordnung. Die Sorptionsmittelfüllung 2 kühlt sich dadurch ab und kann wieder Arbeitsmitteldampf über den Anschlußstutzen 5 ansaugen.

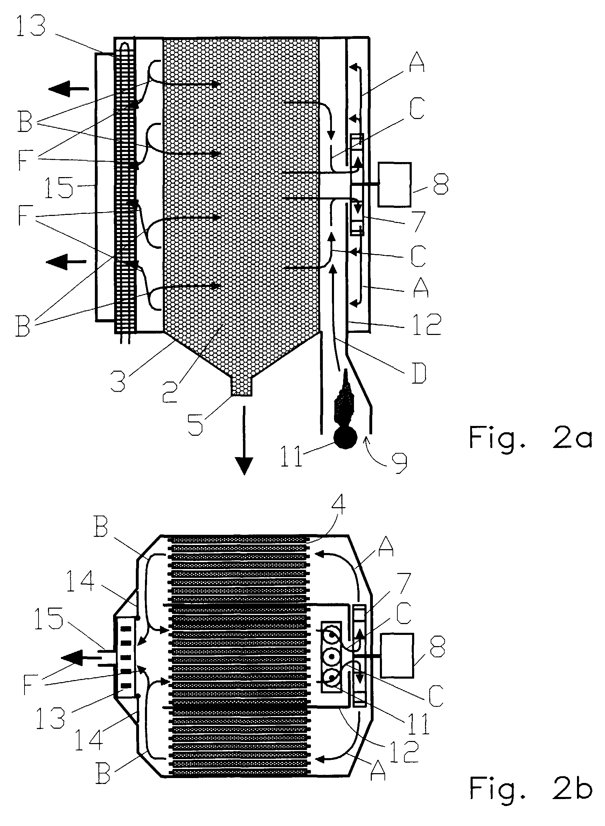

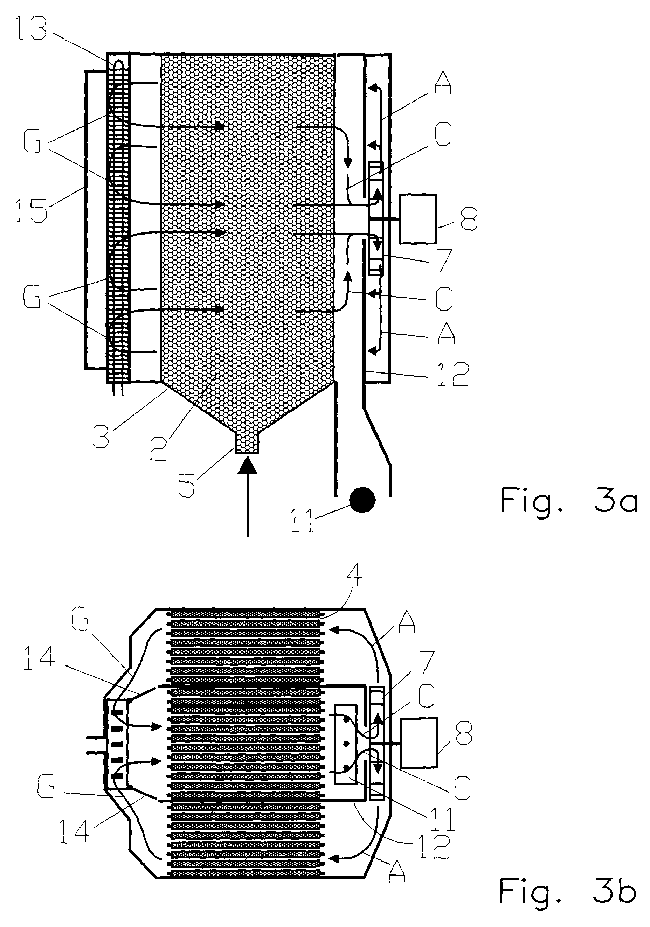

In den Figuren 2 und 3 ist die Sorberanordnung nach den Figuren 1 um einen zusätzlichen Wärmetauscher 13 und ein Klappensystem 14 erweitert. Die obere Öffnung 10 (aus Fig. 1a) ist verschlossen und durch eine Spaltöffnung 15 hinter dem zusätzlichen Wärmetauscher 13 ersetzt.

In Fig. 2a und 2b ist wiederum eine Aufheizphase dargestellt. Analog zu den Figuren 1a und 1b wird der Sorber-Wärmetauscher durch die zirkulierende Gas-Strömung ABC erwärmt. Die Aufheizung der Gas-Strömung selbst erfolgt durch Zumischung der Flammgase D. Der überschüssige Massenstrom F verläßt die Anordnung durch die Spaltöffnung 15 nachdem er seine Restwärme im zusätzlichen Wärmetauscher 13 an ein weiteres Wärmeträgermedium, beispielsweise an das Wasser eines Heizungskreislaufs 17, übertragen hat.

Die Figuren 3a und 3b zeigen schließlich die Abkühlphase der Sorberanordnung analog zu den Figuren 2a, 2b. Die Flammen aus dem Brennrohr 11 sind erloschen und das Klappensystem 14 so umgestellt, daß die Gas-Strömung G nunmehr als Ganzes über den zusätzlichen Wärmetauscher 13 geleitet wird. Die Wärmemenge aus der Sorptionsmittelfüllung wird nun verlustfrei an den Heizungskreislauf 17 überführt. Auch diesmal kann über ein und denselben Sorber-Wärmetauscher die Wärme in die Sorptionsmittelfüllung 2 über eine erzwungene Gas-Strömung ABC zugeführt und auch wieder abgeführt (Gas-Strömung AGC) werden.

## Patentansprüche

1. Verfahren zum Aufheizen und Abkühlen einer Sorberanordnung mit einer Sorptionsmittelfüllung (2), die über einen Sorber-Wärmetauscher erwärmt und anschließend wieder gekühlt wird,
dadurch gekennzeichnet, daß
zum Aufheizen und zum Abkühlen eine erzwungene Gas-Strömung (ABC) über den Sorber-Wärmetauscher geführt wird und die Gas-Strömung (ABC) beim Aufheizprozeß durch die direkte Zumischung heißer Gase (D) erwärmt wird.

2. Verfahren zum Aufheizen und Abkühlen einer Sorberanordnung nach Anspruch 1,
dadurch gekennzeichnet, daß
die heißen Gase (D) aus einem Verbrennungsprozeß stammen.

3. Verfahren zum Aufheizen und Abkühlen einer Sorberanordnung nach einem der vorangehenden Ansprüche,
dadurch gekennzeichnet, daß
der Massenstrom der zugemischten heißen Gase (D) nach der Wärmeabgabe an den Sorber-Wärmetauscher (3) aus der zirkulierenden Gas-Strömung (ABC, AGC) wieder abgeführt wird.

4. Verfahren zum Aufheizen und Abkühlen einer Sorberanordnung nach einem der vorangehenden Ansprüche,
dadurch gekennzeichnet, daß
die erzwungene Gas-Strömung (ABC) durch ein Gebläse (7, 8) erzeugt wird und die heißen Gase (D) zusammen mit der Gas-Strömung (C) durch das Gebläse (7, 8) angesaugt und auf eine homogene Temperatur vermischt werden.

5. Verfahren zum Aufheizen und Abkühlen einer Sorberanordnung nach einem der vorangehenden Ansprüche,
dadurch gekennzeichnet, daß
während der Abkühlphase die erzwungene Gas-Strömung (AGC) über einen zusätzliehen Wärmetauscher (13) und über den Sorber-Wärmetauscher (3) im Kreislauf geführt wird und der zusätzliche Wärmetauscher (13) der Gas-Strömung (AGC) Wärme entzieht.

6. Verfahren zum Aufheizen und Abkühlen einer Sorberanordnung nach einem der vorangehenden Ansprüche,
dadurch gekennzeichnet, daß
während der Abkühlphase der erzwungenen Gas-Strömung (ABC, ABF) Umgebungsluft zugemischt wird, die vom Sorber-Wärmetauscher (3) Wärme aufnimmt.

7. Verfahren zum Aufheizen und Abkühlen einer Sorberanordnung nach einem der vorangehenden Ansprüche,
dadurch gekennzeichnet, daß
die Gas-Strömung (AGC) mittels eines Klappensystems (14) so geführt wird, daß auch beim Aufheizen eine zirkulierende Strömung (AGC) über den Sorber-Wärmetauscher (13) entsteht.

8. Verfahren zum Aufheizen und Abkühlen einer Sorberanordnung nach einem der vorangehenden Ansprüche,
dadurch gekennzeichnet, daß
die Sorptionsmitteltemperatur am Ende der Aufheizung im Bereich zwischen 150 und 400°C und am Ende der Abkühlung im Bereich zwischen 40 und 150 °C liegt.

9. Verfahren zum Aufheizen und Abkühlen einer Sorberanordnung nach einem der vorangehenden Ansprüche,
dadurch gekennzeichnet, daß
beim Abkühlen die erzwungene Gas-Strömung (AGC) über den zusätzlichen Wärmetauscher (13) zirkuliert und ihr zugleich heiße Gase (D) zugemischt werden.

10. Verfahren zum Aufheizen und Abkühlen einer Sorberanordnung nach einem der vorangehenden Ansprüche,
dadurch gekennzeichnet, daß
das Arbeitsmittel Wasser und die Sorptionsmittelfüllung (2) Zeolith enthält.
